# EUROPÄISCHE PATENTSCHRIFT

(11) **EP 0 473 833 B1**
(45) Veröffentlichungstag und Bekanntmachung des Hinweises auf die Patenterteilung: **07.12.1994**
(21) Anmeldenummer: 90117276.7
(22) Anmeldetag: 07.09.1990
(51) Int. Cl.: G01M 1/28

(54) **Verfahren zur Bestimmung der Unwucht eines an einem Fahrzeug angeordneten Fahrzeugrads sowie Auswuchteinrichtung**
Method of determining the unbalance of a vehicle wheel mounted to a vehicle and balancing apparatus
Procédé de détermination du déséquilibre d'une roue aménagée à un véhicule et appareil d'équilibrage

(43) Veröffentlichungstag der Anmeldung: 11.03.1992
(73) Patentinhaber: Schenck Auto-Service-Geräte GmbH, D-64293 Darmstadt (DE)
(72) Erfinder: Gnielka, Peter, Dr., D-6100 Darmstadt (DE); Guyot, Volker, D-6087 Büttelborn 2 (DE); Bünau, Peter, D-6147 Lautertal 2 (DE)
(74) Vertreter: Brandt, Ernst-Ulrich, Dipl.-Phys., Dipl.-Ing.

(56) Entgegenhaltungen:
- EP-A- 0 007 741
- EP-A- 0 027 848
- EP-A- 0 355 485

## Beschreibung

Die Erfindung betrifft ein Verfahren zur Bestimmung der Unwucht nach Lage und Größe eines an einem Fahrzeug angeordneten markierten selbst- oder fremdangetriebenen angehobenen Fahrzeugrads nach Erreichen der erforderlichen Auswuchtdrehzahl durch Ingangsetzen eines Meßzyklus. Weiterhin betrifft die Erfindung eine Auswuchteinrichtung bestehend aus einem bewegbaren, das einzelne markierte selbst- oder fremdangetriebene Fahrzeugrad abstützenden Teil mit einem Gehäuse, in dem ein Unwuchtaufnehmer, eine Winkellagenaufnehmereinrichtung, eine Auswerteeinrichtung und eine Spannungsversorgung angeordnet sind, und einen weiteren tragbaren Teil, der mit dem bewegbaren Teil kommuniziert.

Vorrichtungen zum Bestimmen der Unwucht von an einem Kraftfahrzeug montierten Rädern (Europäische Patentanmeldung, Veröffentlichungsnummer 0355485) besitzen wenigstens einen Meßbock zum Abstützen eines Kraftfahrzeugsrades einen im Meßbock vorgesehenen Meßwertgeber, der von der Unwucht hervorgerufene Schwingungen aufnimmt und ein Gebersignal abgibt, eine Meß-Steuereinrichtung, die aus den Gebersignalen Unwuchtsignale erzeugt, die die Unwucht nach Größe und Richtung angeben, eine Anzeigeeinrichtung, an der wenigstens die Unwuchtgröße angezeigt wird und eine drahtlose Signalübertragungseinrichtung auf dem Weg zwischen dem Meßwertgeber und der Anzeigeeinrichtung. Mit derartigen Vorrichtungen ist es möglich mit einer einzigen Anzeigeeinrichtung beispielsweise bei vierradgetriebenen Fahrzeugen, die an jedem Rad gemessenen Unwuchtwerte und zwar die Winkellage der Unwucht und deren Größe mit Hilfe einer drahtlosen Übertragung auf eine unabhängig von den Meßböcken befindliche Anzeige und Steuereinrichtung zu übertragen. Hierzu ist es erforderlich, daß die Anzeige und Steuereinrichtung drahtlos die einzelnen Meßböcke anspricht und drahtlos die dort vorhandenen Unwuchtmeßwerte abfragt und auf das Anzeigegerät überträgt.

Ausgehend hiervon liegt der vorliegenden Erfindung die Aufgabe zugrunde, zum Auswuchten von an Kraftfahrzeugen angeordneten Rädern ohne Sichtverbindung zwischen Steuer- und Meßgerät und ohne drahtlose Übertragung von Meßwerten, eine Unwuchtanzeige zu bewirken.

Diese Aufgabe wird mit den kennzeichnenden Merkmalen des Verfahrensanspruchs gelöst. Durch den Wegfall jedes weiteren Betätigungseingriffs wird sich der Bedienende voll auf den Geschwindigkeitsbereich konzentrieren, bei welchem die Messung im aufgebockten Zustand des Fahrzeugs durchzuführen ist, so daß er zum richtigen Zeitpunkt vom Fahrzeugsitz aus das Startsignal drahtlos auf die Meßeinrichtung übertragen wird, ohne daß sich der Bedienende um das Ende des selbsttätig ablaufenden Meßlaufs kümmern muß.

Die der Erfindung zugrundeliegende Aufgabe läßt sich auch mit der in Anspruch 2 unter Schutz gestellten Auswuchteinrichtung lösen. Durch die im wesentlichen geschlossene rechteckige Ausgestaltung des Gehäuses können erfindungsgemäß die Seitenflächen für die Anordnung von Anzeigeeinrichtungen oder Druckern verwendet werden und unabhängig davon in der Deckfläche eine Verschiebung der Winkellagenaufnehmereinrichtung quer zur Fortschrittsrichtung des zu untersuchenden Rads durchgeführt werden, damit ohne zusätzliche Hilfsmittel, allein mit Kreidestrichen als Markierung für den Nullpunkt der Winkellage auf den Reifen, auch Reifen untersucht werden können, bei welchen besonders breite radial verlaufende Rillen den Kreidestrich unterbrechen, der sichere Empfang eines Bezugssignals beispielsweise über eine Code-Abtastung sicher gewährleistet ist. Bisher wurde zur Abhilfe bei derartigen Reifen ein reflektierendes Band über die Reifenlauffläche quer zu deren Fortschrittsrichung gelegt, was einen zusätzlichen Arbeitsaufwand darstellt.

Eine erfinderische Ausgestaltung der Auswuchteinrichtung wird in Anspruch 3 unter Schutz gestellt. Durch die herausschwenkbare Anordnung des Anzeigegeräts und/oder des Druckers kann sowohl bei Lichteinfall als auch für eine leichtere Entnahme der ausgedruckten Werte ein Ausschwenken durchgeführt werden.

In noch weiterer Ausgestaltung der Erfindung wird gemäß Anspruch 4 eine Bewegungseinrichtung unter Schutz gestellt, die mit dem das Fahrzeugrad abstützenden Teil der Auswuchteinrichtung verbunden ist, welche für die Weitergabe einer Versorgungsspannung und/oder einer Unwuchtinformation Informationsein- und -ausgänge trägt. Ein derart ausgebildeter Teil einer Auswuchteinrichtung ermöglicht es nunmehr, mit Teilen von Auswuchteinrichtungen zu kommunizieren, die lediglich aus einem Gehäuse mit einer Stütze für ein Fahrzeugrad und einem hiermit zusammengehörenden Unwuchtaufnehmer bestehen und welche darüber hinaus lediglich eine Winkellagenaufnehmereinrichtung, jedoch keine Stromversorgung und auch kein Anzeigegerät und/oder einen Drucker besitzen. Es ist offensichtlich, daß beispielsweise bei der Auswuchtung von vierradangetriebenen Fahrzeugen, bei welchen gleichzeitig alle vier Räder ausgewuchtet werden sollen, lediglich ein kompletter Teil zur Lagerung eines Rades mit einem tragbaren Teil der Auswuchtmaschine zusammenwirkt, während die anderen Räder von Teilen von Auswuchteinrichtungen abgestützt werden, mit welchen lediglich die Unwuchtinformationen dieser Räder aufgenommen und weitergegeben werden, an diesen Teil der Auswuchtvorrichtung, der die Stromversorgung und auch die Auswerteeinrichtung und die Anzeige- und/oder Druckereinrichtung trägt. Hierdurch wird der Aufwand beim Auswuchten vierradangetriebener Fahrzeuge gegenüber dem bisher Bekannten beachtlich verringert.

Eine noch weitere Ausgestaltung des Erfindungsgegenstands wird in Anspruch 5 unter Schutz gestellt. Zufolge der Anordnung von mindestens zwei Infrarot-Sende- und Empfängeranordnungen wird erreicht, daß die bei gleicher Laufrichtung der Räder einer Achse scheinbar entgegengesetzte Drehrichtung des einen Rads mit berücksichtigt wird und bei der Bestimmung der Winkellage der Unwucht eine Fehlmessung in der Winkellage nicht auftritt.

In noch weiterer Ausgestaltung des Erfindungsgedankens wird gemäß Anspruch 6 unter Schutz gestellt, daß ein weiteres drahtlos zu übertragendes Signal auch die Anzeige der Unwuchtinformationen auf dem Anzeigegerät für jedes Rad getrennt steuert.

In der nachfolgenden Beschreibung wird die Erfindung an einem Ausführungsbeispiel näher erläutert.

In schematischer Darstellung zeigen:
Figur 1 eine bewegbare Auswuchteinrichtung in perspektivischer Darstellung
Figur 2 eine Draufsicht auf das Gehäuse der Auswuchteinrichtung
Figur 3 einen Teilschnitt durch das Gehäuse im Bereich des im Gehäuse angeordneten Schwingungsaufnehmers
Figur 4 einen weiteren Teilschnitt durch das Gehäuse im Bereich der Winkellagenaufnahmeeinrichtung
Figur 5 eine Ausgestaltung der Anzeige für die Unwuchtgrößen in Ansicht

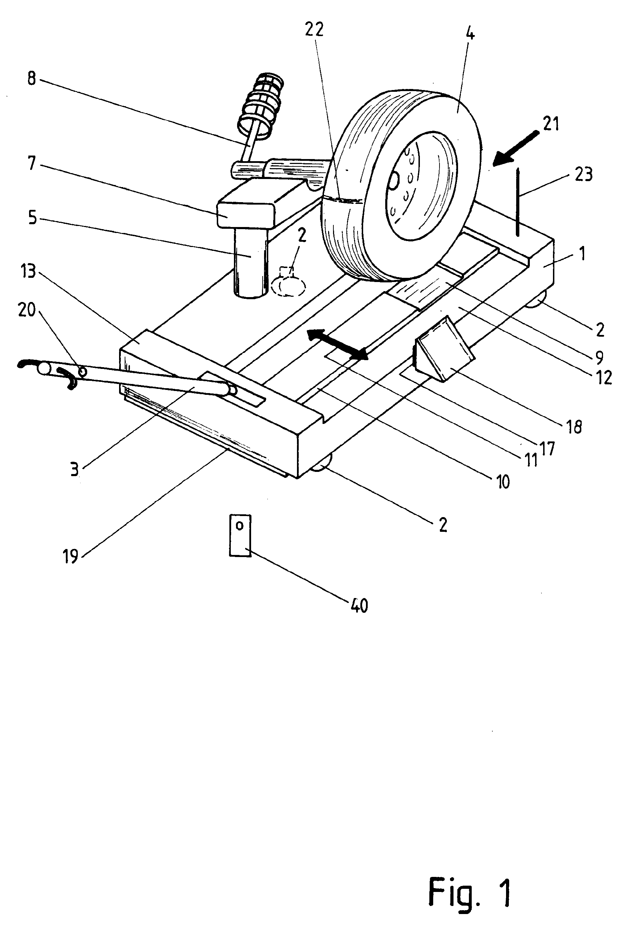

Gemäß Figur 1 stützt sich ein Gehäuse 1 über Laufräder 2 auf den Boden ab. Anstelle der Laufräder 2 können in der selben Weise als Fahrwerk beispielsweise auch Kufen oder Rollen treten, je nachdem ob das Gehäuse 1 innerhalb eines Gebäudes oder außerhalb des Gebäudes eingesetzt werden soll. Mittels einer Bewegungseinrichtung 3, im vorliegenden Fall handelt es sich um eine Stange, kann das auf Laufrädern 2 sich abstützende Gehäuse 1 verfahren werden und somit in den Bereich des zu untersuchenden Kraftfahrzeugrades 4 verbracht werden. Auch können motorgetriebene Bewegungseinrichtungen zum Einsatz kommen.

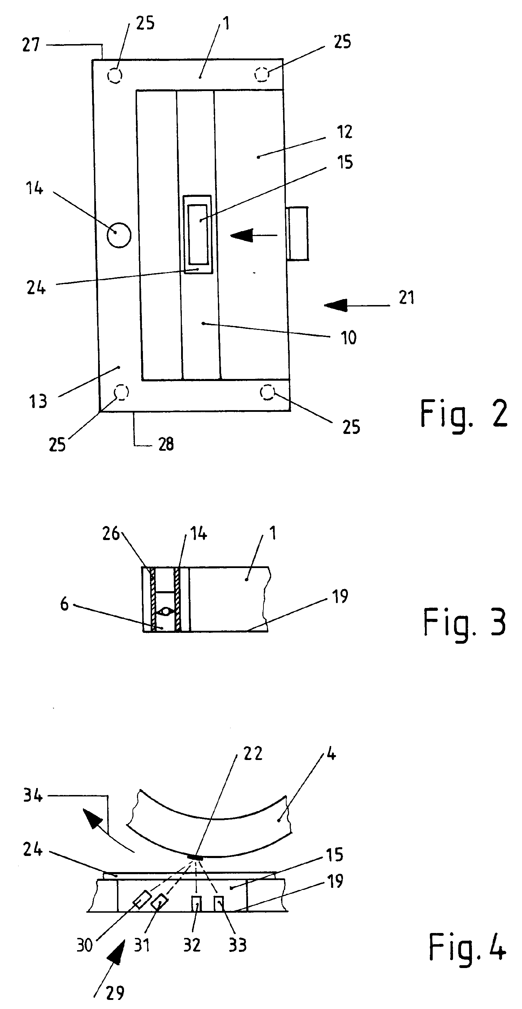

Auf dem Gehäuse 1 ist eine Stütze 5 angeordnet, die sich einerseits auf einem im Gehäuse 1 gelagerten Unwuchtaufnehmer 6 abstützt (vergleiche Figur 3) und andererseits über eine Traverse 7 an einer Stelle der Aufhängung 8 des Kraftfahrzeugrades 4 angreift.

Weiterhin ist eine Winkellagenaufnehmereinrichtung 9 vorgesehen, die im Fall des Ausführungsbeispiels nach Figur 1 auf einen Schieber 10 angeordnet ist, der sich entsprechend einem Doppelpfeil 11 quer zur Fortschrittsrichtung des Kraftfahrzeugrades 4 in einer U-förmigen Ausnehmung 12 des Gehäuses 1 verschieben läßt.

Das Gehäuse 1 ist insgesamt durch eine obere Deckfläche 13, in die auch die U-förmig Ausnehmung 12 integriert ist, soweit abgedeckt, daß lediglich die für die Stütze 5 erforderliche Öffnung 14 (vergleiche Figur 3) und eine Kommunikationsöffnung 15 (vergleiche Figur 2) diese obere Deckfläche 13 durchdringen.

An einer Seitenfläche 16 des geschlossenen Gehäuses 1 ist eine Geräteöffnung 17 vorgesehen, die gemäß Ausführungsbeispiel nach Figur 1 von einem Anzeigegerät 18, welches prismatische Form besitzt, abgedeckt wird.

An der unteren Deckfläche 19 des geschlossenen Gehäuses 1 sind im Falle des Ausführungsbeispiels nach Figur 1 lenkbare Laufräder 2 angeordnet, die im Falle des Meßvorgangs arretierbar sind. Diese Arretierung kann beispielsweise dadurch geschehen, daß durch das anteilige Fahrzeuggewicht, welches sich über seine Aufhängung an der Traverse 7 abstützt, die Federkraft der über Stützfedern sich an der unteren Deckfläche 19 abstützenden Laufräder 2 überwunden wird, sodaß die gesamte untere Deckfläche 19 während des Meßvorgangs fest am Boden aufliegt.

In der Bewegungseinrichtung 3 sind Informationsein- und ausgänge 20 vorgesehen, beispielsweise in Form von Mehrfachstekkern, um zu ermöglichen daß der bewegbare, das einzelne Fahrzeugrad abstützende Teil der Auswuchteinrichtung 21 mit anderen Auswuchteinrichtungen, die beispielsweise keine Anzeigegeräte 18 besitzen oder die keine Spannungsversorgung besitzen, jedoch Unwuchtaufnehmer 6 und eine Winkellagenaufnahmeeinrichtung 9 mit dem bewegbaren, das einzelne Fahrzeugrad abstützende Teil der Auswuchteinrichtung 21 über Kabel zum Informationsaustausch verbunden werden können.

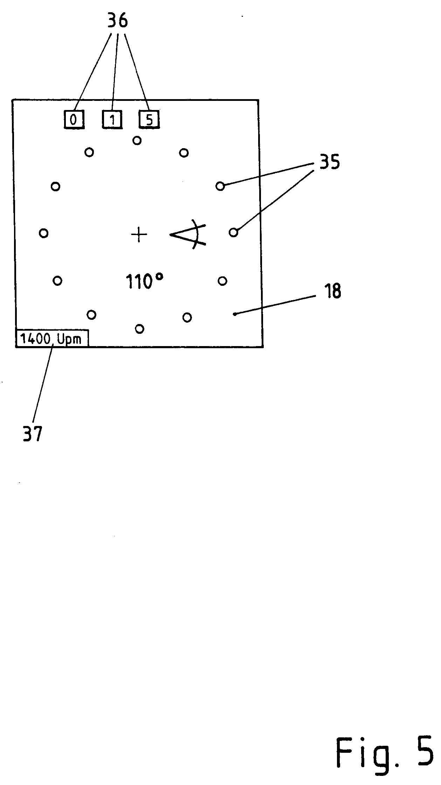

Besitzt wie bereits ausgeführt ein nicht dargestellter bewegbarer, das einzelne Fahrzeugrad abstützender Teil der Auswuchteinrichtung 21 lediglich Unwuchtaufnehmer 6 eine Stütze 5 und eine Traverse 7 zur Abstützung eines Kraftfahrzeugrades 4 und eine Winkellagenaufnahmeeinrichtung 9 jedoch keine Spannungsversorgung, so kann diese mittels Kabel mit dem Informationseingang 20 der Bewegungseinrichtung 3 verbunden werden und das im bewegbaren, das einzelne Fahrzeugrad abstützenden Teil der Auswuchteinrichtung 21 befindliche nicht dargestellte Auswertegerät kann mit Hilfe seiner Spannungsversorgung (ebenfalls nicht dargestellt) die Auswertung der die Unwucht charakterisierenden Werte, das ist deren Winkellage zu einer vorgegebenen Nulllage, beispielsweise einem quer über die Lauffläche des Rades 4 verlaufenden Kreidestrich 22 und deren Größe durchführen und am Anzeigegerät 18 des bewegbaren, das einzelne Fahrzeugrad abstützenden Teils der Auswuchteinrichtung 21 anzeigen werden. Es kann natürlich auch, insbesondere um Übertragungsfehler noch weiter zu minimieren, über den Informationsausgang 20 der Bewegungseinrichtung 3 das Ergebnis dem nicht dargestellten bewegbaren, das einzelne Fahrzeugrad abstützenden Teil der Auswuchteinrichtung 21 wieder zugeführt werden und dort in einer dem Anzeigegerät 18 entsprechenden Anzeigegerät dargestellt werden. Damit ergibt sich der Vorteil, daß beispielsweise bei der Messung von mit Allradantrieb versehenen Kraftfahrzeugen nur eine einzige eine bewegbaren, das einzelne Fahrzeugrad abstützende, Teil besitzende Auswuchteinrichtung 21 vorgesehen werden muß, welche außer der im Gehäuse 1 angeordneten Spannungsversorgung-Auswerteeinrichtung, Unwuchtaufnehmer 6, Anzeigegerät 18 und einer Empfangseinrichtung 23 für den externen Startbefehl, im vorliegenden Fall eine Antenne besitzt, Auswuchteinrichtungen verwendet werden können, die lediglich Unwuchtaufnehmer 6 und Winkellagenaufnehmereinrichtungen 9 tragen und die mit dem bewegbaren Teil der Auswuchteinrichtung 21 über nicht dargestellte Kabel über den Informationsein- und ausgang 20 der Bewegungseinrichtung 3 verbunden sind. Wie bereits ausgeführt können die bewegbaren, das einzelne Fahrzeugrad abstützenden Teile der weiteren Auswuchteinrichtungen 21 zusätzlich Anzeigegeräte 18 enthalt, jedoch keine Spannungsversorgung und keine Auswerteinrichtung. In diesem Fall läßt sich die erfindungsgemäß offenbarte Druckereinheit einsetzen, wenn zusätzlich zu der Anzeige im Anzeigegerät 18 die für die Auswuchtung erforderlichen Werte dem Auswuchtenden auch ausgedruckt vorliegen. Befinden sich die ausgedruckten Werte auf Ausdrucken, die entsprechend der in Figur 5 dargestellten Anzeige ausgestaltet sind, und bei denen auch noch eine eindeutige Zuordnung zu dem entsprechenden Kraftfahrzeugrad 4 vorhanden ist, kann der Auswuchtende die Ausdrucke mitnehmen zu den entsprechenden Rädern 4 und dort ohne Übertragungsfehler zu begehen, die Unwucht nach Lage und Größe am jeweiligen Kraftfahrzeugrad ausgleichen.

Daraus ist ersichtlich, daß zufolge Weglassens von Spannungsversorgungen und Auswerteeinrichtungen bei größtmöglicher Sicherheit gegen Übertragungsfehler eine beachtliche Verbilligung bei der Ausstattung einer Einrichtung mit vier Auswuchteinrichtungen 21 mit je einem bewegbaren, das Fahrzeugrad abstützenden Teil zum Vermessen allradgetriebener Fahrzeuge erreicht wird. Selbstverständlich können auch entsprechend der Anzahl der angetriebenen Achsen bei allradgetriebenen Fahrzeugen die entsprechende Anzahl von Auswuchteinrichtungen 21 mit bewegbaren, die Fahrzeugräder abstützenden Teilen verwendet werden, wie sie in Fig. 1 dargestellt ist. Es können jedoch auch für jede Seite nur eine die Fahrzeugräder abstützende Auswuchteinrichtung 21 mit bewegbarem Teil gemäß Figur 1 verwendet werden und die restlichen Räder dieser Seite ausgestattet sein mit bewegbaren Auswuchteinrichtungen 21 entweder ohne Anzeigeeinrichtung oder mit Anzeigeeinrichtung.

Anschließend wird nunmehr die Funktionsweise eines Auswuchtvorgangs anhand des bewegbaren, das einzelne Fahrzeugrad abstützenden Teils der Auswuchteinrichtung 21 beschrieben.

Ein nicht dargestelltes Fahrzeug wird beispielsweise im Bereich seiner angetriebenen Achse soweit angehoben, daß im Bereich eines jeden Rades dieser Achse ein bewegbares, das einzelne Fahrzeugrad abstützendes Teil der Auswuchteinrichtung unter die Aufhängung des jeweiligen Kraftfahrzeugrades 4 gebracht werden kann. Sind die bewegbaren Teile der Auswuchteinrichtungen 21 unter den Aufhängungen der Kraftfahrzeugräder 4 angeordnet, wird die zusätzliche Hubeinrichtung eingefahren, so daß das auf die Unwucht seiner Räder zu untersuchende Kraftfahrzeug sich mit seinen Radaufhängungen 8 über die Traversen 7 und die Stützen 5, auf denen in den Gehäusen 1 angeordneten Unwuchtaufnehmern 6 abstützen kann. Als Unwuchtaufnehmer haben sich insbesondere Piezo-Kristalle bewährt. Die Stützen 5 einschließlich der Traversen 7 sind so bemessen, daß die Kraftfahrzeugräder 4 nur einen geringen Abstand zu den Kommunikationsöffnungen 15 besitzen. Sind beispielsweise Kraftfahrzeugreifen 4 zu untersuchen, die quer zur Fortschrittsrichtung der Lauffläche breite Einkerbungen aufweisen, so würde der Kreidestrich 22 als Nullmarkierung unter Umständen nicht mehr eindeutig von der Winkellagenaufnehmereinrichtung 9 erkannt werden. Dieser Nachteil ist sofort zu beseitigen, wenn entsprechend dem Doppelpfeil 11 die jeweilige Winkellagenaufnehmereinrichtung 9 unter einen Bereich der Laufsohle des Reifens bewegt wird, welcher eindeutig eine Kreidestrich aufweist. Damit wird gleichzeitig der Vorteil erreicht, daß keine aufwendigen Markierfolien lediglich für die Messung aufgebracht werden müssen und anschließend in einem noch weiteren Arbeitsgang wieder entfernt werden müssen.

Ist das Fahrzeug nunmehr soweit zur Unwuchtmessung vorbereitet, begibt sich der die Auswuchtung Durchführende auf den Fahrersitz des Fahrzeugs, startet das Fahrzeug und bringt durch Gangeinlegen und Betätigen des Gaspedals die Räder auf die vorgeschriebene Drehzahl. Dies kann beispielsweise durch Beobachtung des im Kraftfahrzeug eingebauten Tacho geschehen. Ist die entsprechende Geschwindigkeit oder Reifendrehzahl erreicht, gibt der Auswuchter über einen tragbaren Teil 40 der Auswuchteinrichtung einen Funkbefehl, der über die Empfangseinrichtung 23 dem bewegbaren, das einzelne Fahrzeugrad abstützenden Teil der Auswuchteinrichtung übermittelt wird und einen zeitlich begrenzten Meßvorgang auslöst. Er kann sich nunmehr voll auf die Einhaltung der Geschwindigkeit konzentrieren. Der Meßvorgang läuft nunmehr selbstätig ab. Nach beendetem Meßvorgang steigt der Auswuchter aus dem Fahrzeug aus und erkennt an den Anzeigegeräten 18 sofort die im einzelnen Rad vorhandene Unwucht nach Lage und Größe. Die Beseitigung der Unwucht erfolgt nunmehr durch Anbringen eines entsprechenden Auswuchtsgewichts, an der im Anzeigegerät 18 angegebenen Winkellage am Kraftfahrzeugrad. Ist lediglich eine Druckereinheit anstelle einer Anzeige 18 vorgesehen, können die ausgedruckten Werte wie oben bereits beschrieben ebenfalls zur fehlerfreien Auswuchtung herangezogen werden.

Die in Fig. 2 dargestellte Draufsicht auf das Gehäuse 1 des bewegbaren, das einzelne Fahrzeugrad abstützenden Teils der Auswuchteinrichtung 21 zeigt in übersichtlicher Form, daß die obere Deckfläche 13 lediglich durchbrochen wird von der Öffnung 14 für die Stütze 5 von der Kommunikationsöffnung 15, die mit einer durchsichtigen Abdeckung 24 versehen ist. Anstelle der U-förmigen Ausnehmung 12, in welcher der Schieber einschließlich abgedeckter Kommunikationöffnung 15 enthalten ist, kann auch die Deckfläche 13 des Gehäuses 1 als völlig glatte horizontale Fläche ausgebildet sein, wenn bekannt ist, daß keine Reifen mit Reifenlängsrillen untersucht werden.

In der Figur 2 sind schematisch weiterhin dargestellt, Kugelrollen 25, die federbelastet innerhalb der unteren Deckfläche 19 angeordnet sind. Ein derartiges bewegbares Auswuchtgerät eignet sich insbesondere für Auswuchthallen mit glatten Böden. Wird dieses lenk- und bewegbare, das einzelne Fahrzeugrad abstützende Teil der Auswuchteinrichtung 21, wie oben bereits beschrieben, in Meßposition gebracht und anschließend das Fahrzeug auf die Stützen abgesenkt, so verschwinden die Kugelrollen 25 innerhalb der unteren Bodenfläche und das bewegbare, das einzelne Fahrzeugrad abstützende Teil der Auswuchteinrichtung 21 steht ohne jede weitere Arretiervorrichtung völlig fest auf dem Hallenboden auf.

Der Teilschnitt gemäß Figur 3 zeigt den Bereich der Anordnung des Unwuchtaufnehmers 6 innerhalb des Gehäuses 1. Hierzu ist in der Öffnung 14 des Gehäuses eine Hülse 26 vorgesehen, die auf der unteren Deckfläche 19 aufsteht. Die untere Deckfläche 19 ist zumindest im Bereich der Hülse 26 verstärkt, vorzugsweise im Bereich der Hülse 26 über die gesamte Länge des das einzelne Fahrzeugrad abstüzenden Teils der bewegbaren Auswuchteinrichtung 21, also von Seitenfläche 27 bis Seitenfläche 28, die in Fig. 2 dargestellt sind.

Bevorzugt befindet sich nunmehr innerhalb der Hülse 26 der vorgespannte Unwuchtaufnehmer 6, wobei durch die Hülse 26 gleichzeitig die Gewähr dafür gegeben ist, daß die über die Stütze 5 eingeleiteten Schwingungen stets senkrecht auf den Unwuchtaufnehmer 6 einwirken.

Figur 4 zeigt in schematischer Darstellung eine Winkellagenaufnahmeeinrichtung 29. Die Winkellagenaufnahmeeinrichtung 29 ist an der Innenseite der unteren Deckfläche 19 angeordnet und kommuniziert über die Öffnung 15, welche mit einer durchsichtigen Abdeckung versehen ist, mit der Lauffläche des Kraftfahrzeugrades 4. Am Kraftfahrzeugrad 4 ist eine Kreidestrich 22 angeordnet, der nunmehr mit Infrarotsendern 30, 31 und Infrarotempfängern 32, 33 zusammenwirkt. Im Ausführungsbeispiel nach Figur 4 berührt der Infrarotstrahl bei Bewegung des Kraftfahrzeugrades die Lauffläche des Kraftfahrzeugrades 4, an der noch keine Radmarkierung angeordnet ist und gibt somit dem ihm zugeordneten Empfänger 32 die Meldung "dunkel". Der Infrarotsender 31 nimmt bereits die Information der Markierung 22 auf und sendet diese an den Infrarotempfänger 33. Diese Markierung erscheint bei gleichbleibender Geschwindigkeit immer nach selben Zeitabständen im Empfänger 33 und zeitlich verschoben im Empfänger 32, wenn sich das Rad entsprechend Pfeil 34 dreht. Damit ist eine Zuordnung des Nullpunktes der Winkellage zur Drehrichtung gegeben, welcher erforderlich ist, um für das entsprechende Rad die richtige Winkellage im Auswertegerät zu bestimmen. Dreht sich beispielsweise das auf derselben Antriebswelle befindliche andere Rad, für den Beschauer dreht dieses Rades zwangsläufig in entgegengesetzter Richtung, so erhält als erstes der Infrarotempfänger 32 die Information Nulllage und der Empfänger 33 anschließend. Damit ist eindeutig gewährleistet, daß auch für dieses Rad 4 die Unwuchtlage in der Auswerteeinheit richtig ausgewertet wird.

Die in Figur 5 dargestellte Ansicht der Anzeige 18 für die Unwuchtgrößen und die Unwuchtwinkellagen besteht aus in Kreisform angeordneten Markierungen 35, welche ausgewählte Winkelrichtungen zeigen, einer weiteren Anzeige 36 für die Unwuchtgröße in Gramm oder Unzen und einer Anzeige des Winkels, im Ausführungsbeispiel 110°. Mit Hilfe der Markierungen 35 auf dem Anzeigegerät 18 kann der Auswuchter in einfachster Form die Kreidemarkierung in die entsprechende Lage verdrehen, sodaß an der richtigen Stelle am Felgenhorn das Ausgleichsgewicht eingeschlagen werden kann. In erfinderischer Ausgestaltung der Anzeigeeinrichtung 18 wird die während des Messlaufs vorhandene Drehwinkel des jeweiligen Rades 4 am unteren Rand der Anzeigeeinrichtung 18 in einem Fenster 37 im Ausführungsbeispiel 1400 Upm angezeigt.

## Patentansprüche

1. Verfahren zur Bestimmung der Unwucht nach Lage und Größe eines an einem Fahrzeug angeordneten markierten selbst- oder fremdangetriebenen angehobenen Fahrzeugrads nach Erreichen der erforderlichen Auswuchtdrehzahl durch Ingangsetzen eines Meßzyklus, dadurch gekennzeichnet, daß drahtlos ohne Sichtverbindung zum angehobenen Rad ein Startsignal (40) für den Meßzyklus gegeben wird und daß der Meßzyklus selbständig mit der Anzeige- und oder dem Drucken der Unwucht nach Lage und Größe beendet wird.

2. Auswuchteinrichtung (21) bestehend aus einem bewegbaren, das einzelne markierte selbst- oder fremdangetriebene Fahrzeugrad abstützenden Teil mit einem Gehäuse (1), in dem ein Unwuchtaufnehmer (6), eine Winkellagenaufnehmereinrichtung (9), eine Auswerteeinrichtung und eine Spannungsversorgung angeordnet sind und einem weiteren tragbaren Teil, der mit dem bewegbaren Teil kommuniziert, insbesondere zur Durchführung des Verfahrens nach Anspruch 1, dadurch gekennzeichnet, daß der bewegbare Teil der Auswuchteinrichtung (21) aus dem eine Empfangseinrichtung (23) tragenden Gehäuse (1) gebildet wird, daß das Gehäuse (1) im wesentlichen rechteckig und geschlossen aus horizontal verlaufenden Deckflächen (13, 19) und diese verbindende Seitenflächen (16) besteht, daß die obere Deckfläche (13) mindestens eine Öffnung (14) zur Aufnahme von die Unwuchtschwingungen auf die Unwuchtaufnehmer (6) übertragenden Stützen (5) trägt, daß die obere Deckfläche (13) eine quer zur Fortschrittsrichtung des zu untersuchenden Fahrzeugrades (4) verschiebbare Öffnung (15) zur Kommunikation zwischen der am Fahrzeugrad (4) angeordneten Marke (22) und der im Gehäuse (1) angeordneten Winkellagenaufnehmereinrichtung (9) trägt, daß eine Seitenfläche (16) eine Öffnung (17) für ein Anzeigegerät (18) und/oder ein Druckgerät für die Anzeige der Unwucht nach Lage und Größe trägt und daß der weitere tragbare Teil (40) einen Startknopf für den Start eines Meßzyklus trägt.

3. Auswuchteinrichtung nach Anspruch 2, dadurch gekennzeichnet, daß das Anzeigegerät (18) und/oder der Drucker aus der Seitenfläche (16) herausschwenkbar angeordnet sind.

4. Auswuchteinrichtung nach Anspruch 2 und/oder Anspruch 3, dadurch gekennzeichnet, daß eine Bewegungseinrichtung (3) am bewegbaren, das einzelne markierte selbst- oder fremdangetriebene Fahrzeugrad abstützenden Teil der Auswuchteinrichtung (21) Informationsein- und -ausgänge (20) für die Weitergabe einer Versorgungsspannung und/oder der Unwuchtinformationen trägt.

5. Auswuchteinrichtung nach Anspruch 2 und/oder Anspruch 3, dadurch gekennzeichnet, daß in der Winkellagenaufnehmereinrichtung (9) mindestens zwei Infrarotsende- und empfängeranordnungen (30, 32 bzw. 31, 33) vorgesehen sind.

6. Auswuchteinrichtung nach einem der vorhergehenden Ansprüche, dadurch gekennzeichnet, daß der externe Startgeber (40) auch die Anzeige der Unwuchtinformationen auf das Anzeigegerät (18) für jedes Rad (4) getrennt abruft.

## Claims

1. Method for determining the unbalance, in terms of its position and magnitude, of a marked, jacked-up vehicle wheel which is self or externally driven and which is arranged on a vehicle, by the initiation of a test cycle after the rotational speed required for balancing has been reached, characterised in that, a start signal (40) for the test cycle is emitted to the jacked-up wheel without using wires and not in line-of-sight and that the test cycle is automatically ended with the display and or the printing of the unbalance in terms of its position and magnitude.

2. Balancing device (21) consisting of a movable part which supports the individual, marked vehicle wheel that is self or externally driven and which includes a housing (1) in which an unbalance sensor (6), an angular position sensing device (9), an evaluating device and a voltage supply are arranged and a further portable part which communicates with the movable part especially for carrying out the method in accordance with Claim 1, characterised in that, the movable part of the balancing device (21) is formed by the housing (1) which carries a receiving device (23), that the housing (1) is substantially rectangular and closed and consists of horizontally extending cover faces (13, 19) and side faces (16) which interconnect them, that the upper cover face (13) carries at least one opening (14) for the reception of supports (5) that convey the unbalance oscillations to the unbalance sensor (6), that the upper cover face (13) carries an opening (15) which is displacable transversely to the advancing direction of the vehicle wheel (4) that is being investigated and which is for communication between the mark (22) disposed on the vehicle wheel (4) and the angular position sensing device (9) disposed in the housing (1), that one side face (16) carries an opening (17) for a display unit (18) and/or a printing unit for the display of the unbalance in terms of its position and magnitude and that the further portable part (40) carries a starting knob for starting a test cycle.

3. Balancing device in accordance with Claim 2, characterised in that, the display unit (18) and/or the printer are arranged to be pivotable out from the side face (16).

4. Balancing device in accordance with Claim 2 and/or Claim 3, characterised in that, a manoeuvring device (3) on the movable part of the balancing device (21) supporting the individual, marked vehicle wheel that is self or externally driven carries information inputs and outputs (20) for conveying a supply voltage and/or the unbalance information.

5. Balancing device in accordance with Claim 2 and/or Claim 3, characterised in that, at least two infrared transmitting and receiving arrangements (30, 32 or 31, 33) are provided in the angular position sensing device (9).

6. Balancing device in accordance with any of the preceding Claims, characterised in that, the external starting device (40) also calls up the display of the items of unbalance information on the display unit (18) separately for each wheel (4).

## Revendications

1. Procédé pour déterminer la position et l'importance du déséquilibre d'une roue montée sur un véhicule et soulevée, portant une marque et auto-entraînée ou entraînée de l'extérieur, après avoir atteint la vitesse d'équilibrage nécessaire par mise en action d'un cycle de mesure, caractérisé en ce qu'un signal de démarrage (40) du cycle de mesure est envoyé sans fil ou par un contact visuel à la roue à l'état soulevé et en ce que le cycle de mesure se termine de lui-même par l'affichage et/ou l'impression de la position et de l'importance du balourd.

2. Dispositif d'équilibrage (21) constitué par un élément mobile supportant la roue individuelle du véhicule, portant une marque et auto-entraînée ou entraînée de l'extérieur, comprenant un logement (1) dans lequel sont disposés un capteur de balourd (6), un dispositif de détection de position angulaire (9), un dispositif d'évaluation et une alimentation en tension, et par un autre élément portable qui communique avec l'élément mobile, en particulier pour la mise en oeuvre du procédé selon la revendication 1, caractérisé en ce que l'élément mobile du dispositif d'équilibrage (21) est formé par un logement (1) supportant un dispositif de réception (23), en ce que le logement est constitué essentiellement par des surfaces de recouvrement (13, 19) orientées horizontalement et sensiblement rectangulaires et fermées, et par des surfaces latérales (16) reliant ces dernières, en ce que la surface de recouvrement supérieure (13) comprend au moins une ouverture (14) pour recevoir des appuis (5) transférant les oscillations de déséquilibre au capteur de balourd (6), en ce que la surface de recouvrement supérieure (13) comprend une ouverture (15) pouvant être déplacée transversalement à la direction de l'avance de la roue du véhicule qui est soumise à l'essai pour établir la communication entre la marque (22) portée sur la roue (4) du véhicule et le capteur de position angulaire (9) monté dans le logement (1), en ce qu'une surface latérale (16) comprend une ouverture (17) pour un dispositif d'affichage (18) et/ou un dispositif d'impression pour indiquer la position et l'importance du balourd, et en ce que l'autre élément portable (40) porte un bouton destiné au démarrage d'un cycle de mesure.

3. Dispositif d'équilibrage selon la revendication 2, caractérisé en ce que le dispositif d'affichage (18) et/ou l'imprimante sont disposés de façon à pouvoir être sortis par pivotement à l'extérieur de la surface latérale (16)

4. Dispositif d'équilibrage selon la revendication 2 et/ou 3, caractérisé en ce qu'un dispositif de déplacement (3) monté sur la partie mobile du dispositif d'équilibrage (21) et qui supporte la roue individuelle du véhicule portant une marque, et auto-entraînée ou entraînée de l'extérieur, comporte les entrées et les sorties d'informations (20) pour la retransmission d'une tension d'alimentation et/ou d'informations de déséquilibre.

5. Dispositif d'équilibrage selon la revendication 2 et/ou 3, caractérisé en ce que sont prévus dans le dispositif de détection de position angulaire (9) au moins deux agencements émetteur et récepteur d'infrarouges (30, 32 ou 31, 33).

6. Dispositif d'équilibrage selon l'une des revendications précédentes, caractérisé en ce que le donneur d'ordre de départ externe (40) commande aussi séparément l'affichage des informations de déséquilibre sur l'appareil d'affichage (18) pour chaque roue séparément.
